# EUROPEAN PATENT SPECIFICATION

(11) **EP 2 167 427 B1**
(45) Date of publication and mention of the grant of the patent: **08.11.2017**
(21) Application number: 07866705.2
(22) Date of filing: 17.09.2007
(51) Int. Cl.: C01B 37/04, C01B 37/08, C01B 39/54

(54) **A PROCESS FOR SYNTHESIS OF ATO MOLECULAR SIEVE FRAMEWORK**
VERFAHREN ZUR SYNTHESE VON ATO-MOLSIEBGERÜST
PROCÉDÉ POUR LA SYNTHÈSE D'UNE STRUCTURE DE TAMIS MOLÉCULAIRE ATO

(30) Priority: 28.06.2007 IN MU12342007
(43) Date of publication of application: 31.03.2010
(73) Proprietor: Bharat Petroleum Corporation Limited, Mumbai 400 001 (IN)
(72) Inventor: PAI, Shivanand, Greater Noida 201 306 (IN); NEWALKAR, Bharat, Lakshman, Greater Noida 201 306 (IN); CHOUDARY, Nettem, Venkateshwarlu, Greater Noida 201 306 (IN)
(74) Representative: Potter Clarkson LLP
(86) International application number: PCT/IN2007/000424
(87) International publication number: WO 2009/001370

(56) References cited:
- WO-A-01/36329
- US-A- 4 531 012
- US-A- 5 230 881
- SINHA A K ET AL: "An improved method for the synthesis of the silicoaluminophosphate molecular sieves, SAPO-5, SAPO-11 and SAPO-31" MICROPOROUS AND MESOPOROUS MATERIALS, ELSEVIER SCIENCE PUBLISHING, NEW YORK, US, vol. 31, no. 3, 1 November 1999 (1999-11-01), pages 321-331, XP004180937 ISSN: 1387-1811
- MERIAUDEAU P ET AL: "SAPO-11, SAPO-31, and SAPO-41 Molecular Sieves: Synthesis, Characterization, and Catalytic Properties inn-Octane Hydroisomerization" JOURNAL OF CATALYSIS, ACADEMIC PRESS, DULUTH, MN, US, vol. 169, no. 1, 1 July 1997 (1997-07-01), pages 55-66, XP004465543 ISSN: 0021-9517
- LOPEZ C M ET AL: "The successive crystallization and characterization of SAPO-31 and SAPO-11 from the same synthesis gel: Influence on the selectivity for 1-butene isomerization" ZEOLITES, ELSEVIER SCIENCE PUBLISHING, US, vol. 19, no. 2-3, 9 August 1997 (1997-08-09), pages 133-141, XP004091567 ISSN: 0144-2449
- SINHA A K ET AL: "Characterization of SAPO-11 and SAPO-31 synthesized from aqueous and non-aqueous media" APPLIED CATALYSIS A: GENERAL, ELSEVIER SCIENCE, AMSTERDAM, NL, vol. 270, no. 1-2, 30 August 2004 (2004-08-30), pages 245-252, XP004518337 ISSN: 0926-860X
- VENKATATHRI N: "Synthesis and characterization of vanadium containing ATO- and AFO-type molecular sieves" APPLIED CATALYSIS A: GENERAL, ELSEVIER SCIENCE, AMSTERDAM, NL, vol. 242, no. 2, 20 March 2003 (2003-03-20), pages 393-401, XP004412695 ISSN: 0926-860X
- VENKATATHRI N ET AL: "Synthesis and characterization of TAPO-31 molecular sieves using tripropylamine template" CATALYSIS COMMUNICATIONS, ELSEVIER SCIENCE, AMSTERDAM, NL, vol. 7, no. 12, 1 December 2006 (2006-12-01), pages 1015-1021, XP024973120 ISSN: 1566-7367 [retrieved on 2006-12-01]
- TUSAR N N ET AL: "Framework cobalt and manganese in MeAPO-31 (Me=Co, Mn) molecular sieves" MICROPOROUS AND MESOPOROUS MATERIALS, ELSEVIER SCIENCE PUBLISHING, NEW YORK, US, vol. 55, no. 2, 16 September 2002 (2002-09-16), pages 203-216, XP004379410 ISSN: 1387-1811
- ABBAD B ET AL: "Synthesis of the silicoaluminophosphate molecular sieve SAPO-31 in the presence of fluoride ions and its characterization" MICROPOROUS AND MESOPOROUS MATERIALS, ELSEVIER SCIENCE PUBLISHING, NEW YORK, US, vol. 21, no. 1-3, 1 April 1998 (1998-04-01), pages 13-18, XP004125254 ISSN: 1387-1811
- HAN B ET AL: "Molecular conformations of protonated dipropylamine in AlPO4-11, AlPO4-31, SAPO-34, and AlPO4-41 molecular sieves" JOURNAL OF PHYSICAL CHEMISTRY B 20060427 AMERICAN CHEMICAL SOCIETY US, vol. 110, no. 16, 27 April 2006 (2006-04-27), pages 8188-8193, XP002556632

## Description

### FIELD OF INVENTION

The present invention relates to a highly pure ATO molecular sieve framework and method of preparation of said ATO molecular sieve framework. The ATO molecular sieve framework obtained by the process of the present invention is without any contamination of AEL framework.

### PRIOR ART AND BACKGROUND OF INVENTION

Crystalline molecular sieves have 3-dimensional, microporous frameworks having tetrahedrally coordinated cation [TO₄]. Generally, frameworks comprising oxygen tetrahedra of aluminium and silicon cations lead to the formation of microporous aluminosilicate framework commonly known as zeolites. On the other hand, 3-dimensional microporous aluminophosphate (AlPOs) frameworks classified as zeo-type molecular sieves are composed of oxygen tetrahedra of Al and P cations whereas silicoaluminophosphate (SAPOs) type molecular sieves composed of oxygen tetrahedra of Si, Al and P cations.

Molecular sieves are usually synthesized under hydrothermal conditions from a reactive gel comprising of aluminum, silica and/or phosphorous sources in the presence of an organic structure directing agent, such as an organic nitrogen compound in the temperature range of 100-200°C. Commonly used nitrogen compounds are amines, diamines and quaternary ammonium salts.
In general crystallization of molecular sieves performed under hydrothermal conditions requires prolonged crystallization time for phase formation. This sometimes leads to the formation of thermodynamically stable dense phases such as tridymite, cristobalite, berlinite, quartz as impure phases. This is due to the metastable nature of zeolitic framework under crystallization conditions. Furthermore, conventional hydrothermal approach is often found to be energy intensive.

To overcome such limitation, a microwave-assisted synthesis approach has been developed which offers many distinct advantages over conventional synthesis (Komarneni, et.al. Mater. Res. Bull. 1992, 27, 1393; Ionics 1995, 21, 95).

Crystalline (silico)aluminophosphate(SAPOs) molecular sieves are particularly useful as molecular sieve adsorbents and in hydrocarbon conversion processes. The use of such molecular sieves for catalytic dewaxing has been disclosed in US patents No. 6,833,065, 5,833,837 and 7,077,947. Like wise, they are effectively used in methanol to olefin (MTO) conversion process, as described in US patents No. 6,486,219, 7,214,844, 6,989,470, and 6,995,111. In the aforementioned patent literature, it is disclosed that one of the preferred SAPO molecular sieves for use in the therein described processes is SAPO-31 whose preparation and characterization is disclosed in US Patent No. 4,440,871. However, it is also known in the art that the synthesis of SAPO-31 demands seeding with AlPO-31 crystals up to 10 wt% (Examples 51 and 53; US patent No. 4,440,871) to avoid co-crystallization of impure phases. Accordingly, heretofore, the art is not able to prepare substantially pure SAPO-31 without the addition of significant amounts of AlPO-31 seed crystals.

In view of the above, attempts have been made in the literature to obtain substantially pure AlPO-31 and/or SAPO-31 without any addition of AlPO-31 seeds. In this context, very few successful attempts are reported in the literature.

Among them, synthesis of AlPO-31 and/or SAPO-31 has been disclosed (US Patent No. 5,230,881) using di-n-propylamine as a structure directing agent and mineral acid (HNO₃), if required, to manipulate the final reaction medium pH in the range of 4.5-5.5 in the temperature range of 150-200°C for 5-7 days. The criticality of the final pH is found to be an important parameter in the disclosed art to obtain pure phase of SAPO-31. AlPO-11 (AEL) has been noticed as a common impurity with a lowering of final reaction medium pH. However, as per the the disclosed art (US Patent No. 5,230,881), the crystallized SAPO-31 phase is found to have less than 5 wt% of other crystalline phases.

On similar lines, a successful crystallization of pure AlPO-31 and/or SAPO-31 has been reported (Abbad et.al., Micro. Meso. Mater. 21,1998, pg 13-18) using di-n-propylamine as a structure directing agent and mineral acid (HF) at 200°C within 24 h. Like wise, crystallization of pure phase of AlPO-31 is disclosed in US patent no. 5,552,132 using mixture of trimethyl sulfonium iodide and di-n-propylamine as structure directing agent.

More recently, specific templates have been reported for synthesis of pure ATO framework. A report by Kikhtyanin et.al. (Proceedings of the 12th International Zeolite Conference Vol. III p.1743) discloses use of di-n-pentylamine as a specific structure directing agent for ATO (AlPO-31) framework synthesis at 200°C within 24h. However, crystallinity of the crystallized ATO framework using such template is found to be highly dependent on reaction medium pH. Typically, reaction medium having a pH of less than about 8.0 has been reported to favor crystallization of ATO framework with lower crystallinity.

Extending such approach, use of di-n-hexylamine (Hu et.al. Chem. Letters, 33, 2004, 1510) is reported to favor crystallization of pure SAPO-31 phase. Likewise, use of hexamethyleneimine, as a specific structure directing agent, has been recently disclosed (US patent application 2006/0147364). The use of such template is found to favor crystallization of AlPO-31 at 200 °C within 15 days.

Sinha A K, et al., Microporous and Mesoporous Materials (1999) Vol. 3, No. 3, 321-331 is entitled *"An Improved Method for the synthesis of the Silicoaluminophosphate Molecular Sieves"* and discloses the synthesis of medium-pore molecular sieves SAPO-11 and SAPO-31 and large-pore molecular sieve SAPO-5 using the same template (dipropylamine) by gradual heating of the synthesis gel to obtain highly crystalline materials within 1 to 2 h.

In view of the aforementioned successful attempts and their limitation especially in terms of pH and crystallization time, the present invention discloses a novel structure directing agent favoring faster crystallization of a pure ATO framework at pH below 4.5 h.

### OBJECTS OF THE INVENTION

The primary object of the present invention is to provide a specific structure directing templating agent favoring crystallization of ATO framework from a reaction medium having a pH below 4.5 and free of any mineral acid

Another object of the present invention is to disclose a process for preparing crystalline ATO type molecular sieve framework using such specific structure directing templating agent.

Yet another object of the present invention is to provide a rapid synthesis approach using such specific structure directing agent for crystallization of pure and highly crystalline ATO framework

Still another object of the present invention is to synthesize a ATO framework completely free of commonly observed major impurity phase, namely AEL framework.

### SUMMARY OF THE INVENTION

The present invention discloses a process for the synthesis of ATO molecular sieve framework comprising forming a reaction medium comprising of reactive sources Al₂O₃, P₂O₅ and /or silica and a templating agent and subjecting said reaction medium to microwave hydrothermal heating until crystals of ATO framework are formed.

The process of the invention is as defined in Claim 1.

In one embodiment of the present invention the silica in the reaction medium is SiO₂, Ludox AS-30 or tetraethyl orthosilicate and the templating agent is a long chain quaternary salt of organic moity comprising of a functional group R₁, two anions at the terminal carbon atoms and trimethylamine, wherein R₁ is C₅-C₁₀ linear chain alkane.

In another embodiment of the present invention the functional group R₁ is C₆ and/or C₇ linear chain alkane.

In still another embodiment of the present invention the anions at the terminal carbon atom is an organic anion or an inorganic anion wherein said inorganic anion is selected from a group comprising of phosphate, halogens, sulfate, bisulfate, bisulfite, carbonate, bicarbonate, hexafluorophosphate, nitrate, oxyhalogen, such as chlorate, ClO₃⁻ or perchlorate, ClO₄⁻and wherein said organic anion is selected from as group comprising of carboxylate, R--COO⁻, amide, RCON⁻ , alkoxide, R₃ CO⁻, or etherate, RO⁻.

In yet another embodiment of the present invention the templating agent is synthesized by stirring at temperature of 50 to 80°C, preferably 60 to 80°C in a non-aqueous solvent wherein said non-aqueous solvent is selected from the group comprising of methanol, ethanol, propanol, toluene or tetrahydrofuran for 4 to 24 hours to obtain crystals of said templating agent; cooling in a water-ice bath; separating said crystals of templating agent by filtration or centrifugation; washing said crystals with a solvent wherein said solvent is selected from the group comprising of methanol, absolute ethanol or ethanol; further washing with an anhydrous diethyl ether; and drying said crystals.

In another embodiment of the present invention the reactive sources in the reaction medium are in the molar oxide ratios of 1.0 Al₂O₃: 1.0-1.2 P₂O₅: 0.3-1.2 R : 10-100 H₂O preferably in the molar oxide ratios of 1.0 Al₂O₃: 1.0-1.2 P₂O₅: 0.5-1.0 R : 40-75 H₂O.
In still another embodiment of the present invention the reactive sources in thereaction medium are in the molar oxide ratios of Al₂O₃: P₂O₅: 0-0.6 SiO₂: R: 40/50 H₂O.

In yet another embodiment of the present invention the microwave-hydrothermal heating comprises heating at a temperature of at least 100°C, preferably between 150°C and 200°C, most preferably between 150°C to 180°C for a period of 5 to 360 mins.

In another embodiment of the present invention the crystals of ATO framework are recovered by filtration or centrifugation washed with water and dried at a temperature between 20°C and 120°C.

In still another embodiment of the present invention the crystals of ATO phase are subjected to calcination at a temperature in the range of 200-800°C, preferably in the range of 300-600°C for a period of 2-24h.

In still another embodiment of the present invention the ATO molecular sieve framework obtained by the process of the present invention is pure and free from impurity phase wherein said impurity phase is AEL framework.

In one embodiment of the present invention the ATO molecular sieve framework is contacted with hydrocarbon component.

In another embodiment of the present invention the ATO molecular sieve framework is in hydrogen form and comprises at least one group VIII metal in the range of 0.05-0.3 wt%.

In yet another embodiment of the present invention the ATO molecular sieve framework is shaped in the form of extrudates or beads using binders selected from the group comprising alumina, clay or combination thereof in the range of 0-80 wt% preferably in the range of 20-50 wt%.

In yet another embodiment the present invention discloses an ATO molecular sieve framework comprising of reactive sources Al₂O₃, P₂O₅ and /or silica and a templating agent as hereinbefore described.

### BRIEF DESCRIPTION OF THE ACCOMPANYING DRAWINGS

**FIGURE 1****:** X-ray pattern (CuKα) of the synthesized AlPO-31/SAPO-31.
**FIGURE 2****:** Ammonia TPD profile for AlPO-31 and SAPO-31.
**FIGURE 3****:** Scanning Electron Micrograph for AlPO-31.

### DESCRIPTION OF THE INVENTION

The microporous aluminophosphate, having ATO type framework disclosed in the present invention is produced by microwave-hydrothermal crystallization from a reaction mixture containing reactive sources of phosphorus and aluminum and an organic structure directing agent (Diquat-hydroxide), and, optionally, additional divalent metals or sources of silica. The preparative process typically comprises forming a reaction mixture which in terms of mole ratios is:

Al₂O₃: P₂O₅: 0.3-1.2 R: 10-100 H₂O

where R is the structure directing agent namely diquat-hydroxide.

The reaction mixture is placed in a teflon vessel inert towards the reaction mixture and heated under microwave-hydrothermal conditions (MARS-5, CEM Corp, USA) until crystallized, under static conditions at a temperature of at least about 100°C, preferably between 150°C and 200°C for a period of 5 to 360 mins. The solid crystalline reaction product is then recovered by any convenient method, such as filtration or centrifugation, washed with water and dried in air at a temperature between ambient and about 120°C.

In a preferred crystallization method, the source of phosphorus is phosphoric acid, and the source of aluminum is a hydrated aluminum oxide of the trade name Catapal (Sasol), the temperature is 150°C to 180°C, the crystallization time is from 15 to 180 mins, and the ratio of compounds in the reaction mixture is 1.0 Al₂O₃: 1.0-1.2 P₂O₅: 0.5-1.0R: 40-75 H₂O.

The templating agent is diquat-hydroxide and is present in the reaction mixture in an amount ranging from about 0.5 to 1.0 moles per mole of alumina. Additionally silica may also be introduced into the reaction. The preferred source of silica is either Ludox AS-30 or tetraethyl orthosilicate.

The structure directing agent used is known as Diquat compounds. The organic cation R⁺, also designated herein as Diquat-6/7, is derived from the Diquat-6/7 hydroxide or organic or inorganic salt of Diquat-6/7. The salts of Diquat-6/7 are obtained by reacting a suitable precursor salt containing the functional group R₁, e.g., a hexyl/ heptyl derivative, containing two anions at the terminal carbon atoms, such as, 1,7-dibromoheptane / 1,6-dibromohexane, with a stoichiometrically required amount of trimethylamine to form a diquaternary salt of the organic cation. The synthesis of the original salt of Diquat-6/7 can be carried out with an organic or inorganic precursor salt containing the functional group R₁. We disclose processes in which the R₁ group of the organic cation may be heptyl/ hexyl or it may have one or more double or triple unsaturated bonds. Thus, for example, R₁ may have one double unsaturated bond, or two or three consecutive or non-consecutive double unsaturated bonds. Alternatively, the Rigroup may contain at least one triple unsaturated bond. However, in the most preferred embodiment, the R₁ group is heptyl/ hexyl.

The precursor salt contains two anions at the terminal carbon atoms of the functional group R₁. Thus, the precursor salt has a formula A--R₁ --A, wherein R₁ is as defined above and A is an organic or inorganic anion. Suitable inorganic anions are phosphate, halogens, e.g., fluoride, chloride, bromide or iodide, sulfate, bisulfate, bisulfite, carbonate, bicarbonate, hexafluorophosphate, nitrate, oxyhalogen, such as chlorate, ClO₃⁻ or perchlorate, ClO₄.⁻. Representative suitable organic anions are carboxylate, R--COO⁻, amide, RCON⁻, alkoxide, R₃ CO⁻, or etherate, RO⁻.

The synthesis of the Diquat-6/7 salt is conducted with a continuous stirring at a temperature of about 50 to about 80°C., preferably about 60°C. to about 80°C., at autogenous pressure in a suitable non-aqueous solvent, such as alcohol, e.g., ethanol, toluene or tetrahydrofuran, until crystals of the Diquat-6/7 salt are formed, usually for about 4 to about 24 hours. The crystals of the product settle to the bottom, the reaction mixture is cooled e.g., in a water-ice bath, and the product is separated from the reaction mixture by any suitable means, e.g., by filtration or centrifugaton. The crystals are then washed with a suitable solvent, e.g., absolute ethanol, followed by a wash with an anhydrous diethyl ether. The Diquat-6/7 salt crystals are then dried. The hydroxide form of Diquat-7 is obtained in any conventional manner from the salt of Diquat-6/7, such as by ion exchanging the salt of Diquat-7 with a suitable hydroxide in any conventional manner, e.g., in an ion-exchange column. Any of the conventional ion-exchange techniques is used to replace the original anions with the hydroxide anion, as will be obvious to those skilled in the art. Representative of such ion exchange techniques are those disclosed in a wide variety of patents, e.g., U.S. Pat. Nos. 3,140,249, 3,140,251 and 3,140,253.

The Diquat-6/7 hydroxide, when used as per the present invention leads to crystallization of AlPO-31/SAPO-31 phase having a characteristic X-ray diffraction pattern, set forth below in Table 1.

The crystallized ATO phase is subjected to post synthesis treatment namely calcination in the temperature range of 200-800°C, more preferably in the range of 300-600°C to remove the entrapped organic moieties for the period of 2-24h in air. Thus obtained calcined form is also found to have similar X-ray diffraction pattern as set forth in Table 1. The calcined form of the ATO phase is subjected to Nitrogen uptake measurement at -196°C to estimate its surface area and micropore volume as per ASTM method 4365 applicable for microporous solids. Furthermore, the uptake of various probe molecules such as m-xylene, p-xylene, n-hexane, n-octane, n-heptane, cyclohexane is measured over the calcined phase at 20°C to judge the adsorption crystallinity of the phase crystallized as per the art disclosed in the present invention.

As noted above, SAPO-31 functions well as a molecular sieve adsorbent. Additionally, catalysts containing SAPO-31 in admixture with at least one hydrogenation component, such as platinum, palladium, tungsten, vanadium, molybdenum, nickel, cobalt, chromium, and manganese, are excellent dewaxing catalysts (sometimes referred to as "catalysts"). Combinations of these metals such as cobalt-molybdenum, cobalt-nickel, nickel-tungsten or cobalt-nickel-tungsten, are also useful with such catalysts. Such catalysts generally comprise SAPO-31 and from about 0.01% to 10%, preferably from about 0.1% to about 5% of the hydrogenation component by weight of SAPO-31. Preferred hydrogenation components are platinum and palladium and, when employed, are preferably employed between about 0.1 percent and 1.5 percent by Weight of SAPO-31.

**Table 1. X-ray diffraction data for as synthesized and/or calcined ATO framework**

| 2θ/° | d(Å) | Rel. Int. |
|---|---|---|
| 8.57 | 10.29 | 34.32 |
| 17.02 | 5.20 | 3.37 |
| 18.31 | 4.83 | 5.47 |
| 20.19 | 4.39 | 61.98 |
| 22.00 | 4.03 | 31.90 |
| 22.57 | 3.93 | 100.00 |
| 25.07 | 3.54 | 4.42 |
| 25.70 | 3.46 | 3.39 |
| 26.82 | 3.32 | 0.81 |
| 27.91 | 3.19 | 10.76 |
| 29.71 | 3.00 | 6.39 |
| 31.68 | 2.82 | 18.13 |
| 35.13 | 2.55 | 6.87 |

The physical form of SAPO-31 depends on the type of catalytic reactor being employed and may be in the form of a granule or powder, and is desirably compacted into a more readily usable form (e.g., larger agglomerates), with a silica or alumina binder for fluidized bed reaction, or pills, prills, spheres, extrudates, or other shapes of controlled size to accord adequate catalyst-reactant contact.

The present invention is further illustrated and supported by the following examples. These are merely representative examples and optimization details and are not intended to restrict the scope of the present invention in any way.

### Example-1

### Reparation of Diquat-6/7 dihydroxide salt:

The Diquat-6/7 dihydroxide salt used to crystallize molecular sieve AlPO-31 and/or SAPO-31 is prepared by reacting 1,7-dibromoheptane/ 1,6-dibromohexane and trimethylamine in accordance with the following stoichiometric equation:
The procedure used is as follows:
50 grams of 1,7-dibromoheptane (Sigma-Aldrich Chemical Company) is weighed out and transferred directly to a two-liter, three-necked reaction flask equipped with a stirrer. 100 ml absolute ethanol is added to the reaction flask while the contents of the flask are stirred continuously. Then, 100 grams (excess) of trimethylamine solution (25% in methanol, Sigma-Aldrich Chemical Company) is transferred directly to the two-liter reaction flask. The two-liter reaction flask is fitted with a dry-ice condenser to minimize (CH₃)₃N loss during reflux.

The reaction mixture is refluxed for about 14 hours. White crystals of Diquat-7 dibromide are formed and separated from the reaction solution at the end of the reflux period. The reaction flask is cooled by immersion in water-ice bath. The product is then filtered on a Buchner funnel. Product crystals are washed on the funnel several times with absolute ethanol, then several times with anhydrous diethyl ether. The Diquat-7 dibromine product crystals are dried by air stream on the Buchner funnel after the ether wash. Thus obtained dibromide salt of diquat-7 is subjected to ion exchange procedure to convert it to dihydroxide form using anion exchange resion Dowex 8X. Typically, aqueous solution of 50 wt% of dibromide salt of Diquat-6/7 is slurried in 1L water containing 20 g of resin for 20 h to obtain dihydroxide salt of Diquat-6/7.

### Example-2

### Synthesis of AlPO-31:

AlPO-31 is crystallized from a reaction mixture prepared by combining 2.3 grams of Psedoboehmite (Catapal vista B, Sasol) with 3.7 grams of 85 wt.% orthophosphoric acid (H₃ PO₄) and 5.0 grams of water and stirred until homogeneous. To this mixture is added 8 grams of Diquat-7 hydroxide solution (22% in water) and the mixture further stirred. The composition of the final reaction mixture in molar oxide ratios is:

0.5 Diquat-7 (OH)₂ : 1Al₂ O₃ : 1 P₂O₅ : 45 H₂O

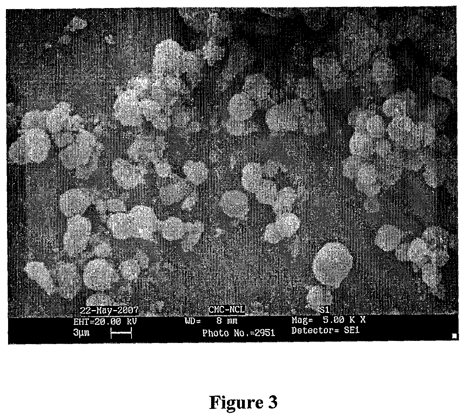

This homogenised reaction mixture is placed in a stainless steel pressure vessel lined with an inert plastic material and heated in under microwave-hydrothermal conditions by employing MARS-5 (CEM,USA) unit at 180°C at autogenous pressure for 3 hours. The solid reaction product is recovered by filtration, washed with water, and dried in air at 120°C. Thus obtained product is subjected physicochemical characterization. X-ray diffraction pattern of as-synthesized form displaying the characteristic peaks of ATO phase as listed in Table 1. The morphology of the sample is investigated by means of scanning electron microscope (SEM, Leica, Cambridge, Model 440, Fig. 3).

### Example -3

### Synthesis of AlPO-31:

AlPO-31 is crystallized from a reaction mixture prepared by combining 2.3 grams of Psedoboehmite (Catapal vista B, Sasol) with 3.7 grams of 85 wt.% orthophosphoric acid (H₃ PO₄)and 5.0 grams of water and stirred until homogeneous. To this mixture is added 8 grams of Diquat-6 hydroxide solution (22% in water) and the mixture further stirred. The composition of the final reaction mixture in molar oxide ratios is:

0.5 Diquat-6 (OH)₂:1 Al₂ O₃ : 1 P₂O₅ : 45 H₂O

This homogenised reaction mixture is placed in a stainless steel pressure vessel lined with an inert plastic material and heated in under microwave-hydrothermal conditions by employing MARS-5 (CEM,USA) unit at 180°C at autogenous pressure for 3 hours. The solid reaction product is recovered by filtration, washed with water, and dried in air at 120°C. Thus obtained product is subjected physicochemical characterization. X-ray diffraction pattern of as-synthesized form displaying the characteristic peaks of ATO phase as listed in Table 1.

### Example -4

### Syntheses of AlPO-31:

SAPO-31 is crystallized from a reaction mixture prepared by combining 2.0 grams of Psedoboehmite (Catapal vista B, Sasol) with 3.2 grams of 85 wt.% orthophosphoric acid (H₃PO₄) and 4.0 grams of water and stirred until homogeneous. To this mixture is added 1.12 grams of an aqueous sol of 30 wt.% SiO₂ and the mixture is further stirred until homogeneous. To this mixture is added 7 grams of Diquat-7 hydroxide solution and the mixture is stirred until homogeneous. The composition of the final reaction mixture in molar oxide ratios is: 0.5 Diquat-7 (OH)₂ : 1 Al₂ O₃ : 1 P₂O₅ : 0.4 SiO₂: 45 H₂O

A portion of this reaction mixture is placed in a stainless steel pressure vessel lined with an inert plastic material and heated in under microwave-hydrothermal conditions by employing MARS-5 (CEM,USA) unit at 160°C at autogenous pressure for 4 hours. The solid reaction product is recovered by filtration, washed with water, and dried in air at 120°C. Thus obtained product is subjected physicochemical characterization. X-ray diffraction pattern of as-synthesized form displaying the characteristic peaks of ATO phase as listed in Table 1.

### Example -5

### Calcination of ATO Framework:

The material from Example 1 is calcined in air in the following manner. A thin bed of material is heated in a tubular quartz reactor from room temperature to 120°C at a rate of 1°C per minute and held at 120°C for two hours. The temperature is then ramped upto 540°C at the same rate and held at this temperature for 10 hours.

### Example -6

### Nitrogen Adsorption Analysis:

The calcined form of AlPO-31 as prepared in Example-5 has a micropore volume (t-plot) of about 0.20 cc/gm with surface area of about 275 m²/g based on adsorption isotherm at 77 K recorded on AS-1C unit from Quantachrome. The nitrogen adsorption isotherm is analyzed using the non linear density function theory (NLDFT) approach (J. Phys. Chem. B.; 2001 105(29); 6817) and the conventional t-plot method (J. Catalysis, 1965, 4, 319). The DFT analysis also shows that calcined form AlPO-31 has a pore size of about 0.53 nm.

### Example -7

### Ammonia TPD analysis:

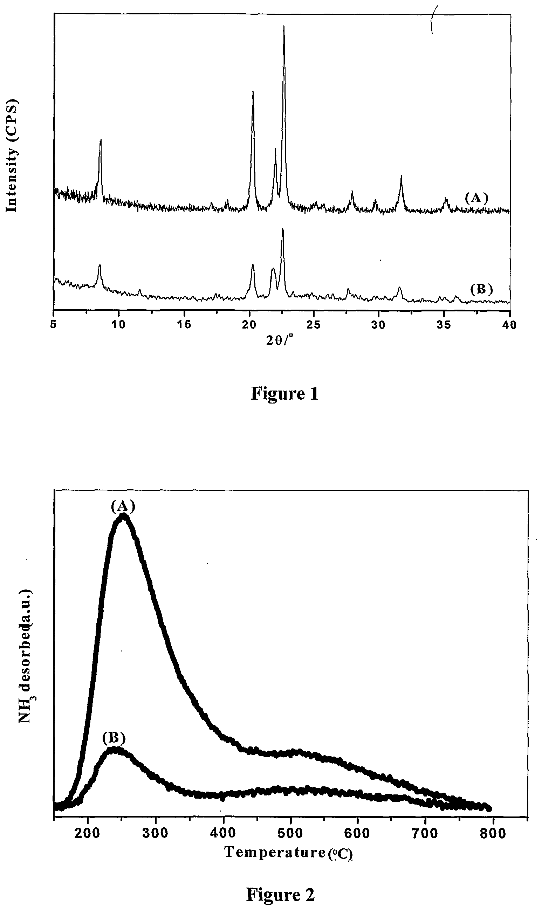

The acidity for the alumino/ silicoaluminophosphate ATO framework is measured using ammonia-TPD technique. Typically, 50 mg of samples prepared as per examples 2 and 4 and treated as per example 5 are exposed to 6% ammonia/ helium mixture and ammonia desorption is recorded as a function of temperature using Alta-Mira AMI200 unit. The measured TPD curves (Figure 2) demonstrate increased acidity level for silicoaluminophosphate framework (0.332 mmol/g) as against aluminophosphate framework (which is found to be negligible).

### Example -8

### Hydrocarbon uptake capacities:

Adsorption capacities are measured on this calcined product using a standard McBain-Bakr gravimetric adsorption apparatus. The following data (Table 2) is obtained on a sample activated at 300°C.

**Table 2: Hydrocarbon sorption capacities at 25°C and relative pressure of 0.4**

| Hydrocarbon | Kinetic diameter, Å | Wt% adsorbed |
|---|---|---|
| Cyclohexane | 6.0 | 5.4 |
| n-Hexane | 4.3 | 5.2 |
| P-xylene | 6.2 | 3.0 |
| m-xylene | 6.8 | 0 |

Thus, the pore size of the calcined product is >4.3 Å and <6.2 Å, as shown by adsorption of n-hexane, kinetic diameter of 4.3 A and nil adsorption of m-xylene.

### The main advantages of the present invention are:

1. The specific structure directing agent or templating agent disclosed in the present invention favors crystallization of ATO framework from a reaction medium having a pH below 4.5.
2. The present invention discloses a very fast and rapid synthesis approach using such templating agent for preparing crystalline ATO type molecular sieve framework.
3. The crystalline ATO type molecular sieve framework obtained by the process of the present invention is very pure and completely free from commonly observed major impurity phase, namely AEL framework.

## Claims

1. A process for the synthesis of ATO molecular sieve framework comprising:
(a) forming a reaction medium comprising of reactive sources Al₂O₃, P₂O₅ a templating agent and optionally silica wherein said templating agent is a long chain quaternary salt, being a diquat compound, consisting of a functional group R₁, two anions at the terminal carbon atoms and trimethylamine wherein said functional group R₁ is C₅-C₁₀ linear chain alkane;
(b) subjecting said reaction medium to microwave hydrothermal heating until crystals of ATO framework are formed.

2. The process as claimed in claim 1 wherein functional group R₁ is C₆ and/or C₇ linear chain alkane.

3. The process as claimed in claim 1 or claim 2 wherein said anions at the terminal carbon atom is an organic anion or an inorganic anion wherein said inorganic anion is selected from a group comprising phosphate, halogens, sulfate, hydroxyl, bisulfate, bisulfite, carbonate, bicarbonate, hexafluorophosphate, nitrate, oxyhalogen, such as chlorate, ClO₃⁻ or perchlorate, ClO₄⁻and wherein said organic anion is selected from a group comprising carboxylate, R--COO⁻, amide, RCON⁻ , alkoxide, R₃ CO⁻, or etherate, RO⁻.

4. The process as claimed in claim 1 wherein:
the R₁ group of the organic cation is heptyl / hexyl; and
said templating agent is synthesized by a process comprising reacting a precursor containing the functional group R₁ and two anions at the terminal carbon atoms with a stoichiometrically required amount of trimethylamine to form a diquaternary salt.

5. The process as claimed in claim 4, wherein the precursor has a formula
A--R₁--A
wherein A is an organic or inorganic anion.

6. The process as claimed in claim 5, wherein A is an inorganic anion selected from phosphate, halogens, sulfate, bisulfate, bisulfite, carbonate, bicarbonate, hexafluorophosphate, nitrate or oxyhalogen, or A is an organic anion selected from carboxylate, R--COO⁻, amide, RCON⁻, alkoxide, R₃ CO⁻, or etherate, RO⁻.

7. The process as claimed in any one of claims 4 to 6 wherein the precursor is 1,7-dibromoheptane or 1,6-dibromohexane.

8. The process as claimed in any one of claims 4 to 7 wherein said templating agent is synthesized by a process comprising stirring the precursor as defined in claim 4 at temperature of 50 to 80°C at autogenous pressure in a non-aqueous solvent wherein said non-aqueous solvent is selected from the group comprising alcohol, toluene or tetrahydrofuran for 4 to 24 hours.

9. The process as claimed in claim 8 wherein the templating agent is synthesised by a process comprising the further step of converting the agent to hydroxide salt form by ion exchange using an ion-exchange column.

10. The process as claimed in claim 1 wherein said silica is selected from the group comprising SiO₂, Ludox AS-30 or tetraethyl orthosilicate.

11. The process as claimed in claims 1 to 3 and 10 wherein said reactive sources in said reaction medium are in the molar oxide ratios of 1.0 Al₂O₃: 1.0-1.2 P₂O₅: 0.3-1.2 R : 10-100 H₂O.

12. The process as claimed in claim 11 wherein said reactive sources in the reaction medium are in the molar oxide ratios of
1.0 Al₂O₃: 1.0-1.2 P₂O₅ : 0.5-1.0 R : 40-75 H₂O.

13. The process as claimed in claims 1 to 3 and 10 wherein said reactive sources in said reaction medium are in the molar oxide ratios of
Al₂O₃: P₂O₅ : 0-0.6 SiO₂ : R: 40/50 H₂O.

14. The process as claimed in any one of claims 1 to 3 and 10 to 13 wherein said microwave-hydrothermal heating comprises heating at a temperature of at least 100°C, preferably between 150°C and 200°C, most preferably between 150°C to 180°C for a period of 5 to 360 mins.

15. The process as claimed in any one of claims 1 to 3 and 10 to 14 wherein said crystals of ATO framework are recovered by filtration or centrifugation, washed with water and dried at a temperature between 20°C and 120°C.

16. The process as claimed in any one of claims 1 to 3 and 10 to 15 wherein said crystals of ATO phase are subjected to calcination at a temperature in the range of 200-800°C, preferably in the range of 300-600°C for a period of 2-24h.

## Patentansprüche

1. Vorgang zum Synthetisieren eines ATO-Molekularsieb-Rahmens, Folgendes umfassend:
(a) Ausbilden eines Reaktionsmediums, umfassend reaktive Quellen Al₂O₃, P₂O₅, ein Templatiermittel und optional Kieselsäure, wobei das Templatiermittel ein langkettiges quartäres Salz ist, bei dem es sich um eine Diquatverbindung handelt,
bestehend aus einer funktionellen Gruppe R₁, zwei Anionen an den endständigen Kohlenstoffatomen und Trimethylamin, wobei die funktionelle Gruppe R₁ linear verkettetes C₅-C₁₀-Alkan ist;
(b) Aussetzen des Reaktionsmediums einer hydrothermalen Mikrowellenerwärmung, bis ATO-Rahmenkristalle ausgebildet werden.

2. Vorgang nach Anspruch 1, wobei die funktionelle Gruppe R₁ linear verkettetes C₆- und/oder C₇-Alkan ist.

3. Vorgang nach Anspruch 1 oder 2, wobei die Anionen an dem endständigen Kohlenstoffatom ein organisches Anion oder ein anorganisches Anion sind, wobei das anorganische Anion ausgewählt ist aus einer Gruppe, die Folgendes umfasst: Phosphat, Halogene, Sulfat, Hydroxyl, Bisulfat, Bisulfit, Carbonat, Bicarbonat, Hexafluorphosphat, Nitrat, Oxyhalogen, wie etwa Chlorat, ClO₃⁻ und Perchlorat, ClO₄⁻und wobei das organische Anion ausgewählt ist aus einer Gruppe, die Folgendes umfasst: Carboxylat, R-COO⁻, Amid, RCON⁻, Alkoxid, R₃ CO⁻ und Etherat, RO⁻.

4. Vorgang nach Anspruch 1 wobei:
die R₁-Gruppe des organischen Kations Heptyl/Hexyl ist; und
das Templatiermittel synthetisiert wird anhand eines Vorgangs, umfassend das Umsetzen eines Präkursors, der die funktionelle Gruppe R₁ und zwei Anionen an den endständigen Kohlenstoffatomen enthält, mit einer stöchiometrisch erforderlichen Menge von Trimethylamin, um ein Diquartärsalz auszubilden.

5. Vorgang nach Anspruch 4, wobei der Präkursor die folgende Formel aufweist:
A-R₁-A
wobei A ein organisches oder anorganisches Anion ist.

6. Vorgang nach Anspruch 5, wobei A ein anorganisches Anion ist, ausgewählt aus Phosphat, Halogenen, Sulfat, Bisulfat, Bisulfit, Carbonat, Bicarbonat, Hexafluorphosphat, Nitrat und Oxyhalogen, oder A ein organisches Anion ist, ausgewählt aus Carboxylat, R-COO⁻, Amid, RCON⁻, Alkoxid, R₃ CO⁻ und Etherat, RO⁻.

7. Vorgang nach einem der Ansprüche 4 bis 6, wobei der Präkursor 1,7-Dibromheptan oder 1,6-Dibromhexan ist.

8. Vorgang nach einem der Ansprüche 4 bis 7, wobei das Templatiermittel synthetisiert wird unter Einsatz eines Vorgangs, der Folgendes umfasst: Rühren des Präkursors nach Anspruch 4 bei einer Temperatur von 50 bis 80 °C bei autogenem Druck 4 bis 24 Stunden lang in einem nicht wässrigen Lösungsmittel, wobei das nicht wässrige Lösungsmittel ausgewählt ist aus der Gruppe, die Folgendes umfasst: Alkohol, Toluol und Tetrahydrofuran.

9. Vorgang nach Anspruch 8, wobei das Templatiermittel synthetisiert wird unter Einsatz eines Vorgangs, der Folgendes umfasst: den weiteren Schritt des Umwandeins des Mittels in Hydroxidsalzform durch Ionenaustausch unter Einsatz einer Ionenaustauschsäule.

10. Vorgang nach Anspruch 1, wobei die Kieselsäure ausgewählt ist aus der Gruppe, die Folgendes umfasst: SiO₂, Ludox AS-30 und Tetraethylorthosilicat.

11. Vorgang nach Anspruch 1 bis 3 und 10, wobei die reaktiven Quellen in dem Reaktionsmedium in den folgenden molaren Oxidverhältnissen vorliegen: 1,0 Al₂O₃: 1,0-1,2 P₂O₅: 0,3-1,2 R : 10-100 H₂O.

12. Vorgang nach Anspruch 11, wobei die reaktiven Quellen in dem Reaktionsmedium in den folgenden molaren Oxidverhältnissen vorliegen:
1,0 Al₂O₃ : 1,0-1,2 P₂O₅ : 0,5-1,0 R : 40-75 H₂O.

13. Vorgang nach Anspruch 1 bis 3 und 10, wobei die reaktiven Quellen in dem Reaktionsmedium in den folgenden molaren Oxidverhältnissen vorliegen:
Al₂O₃: P₂O₅ : 0-0,6 SiO₂ : R: 40/50 H₂O.

14. Vorgang nach einem der Ansprüche 1 bis 3 und 10 bis 13, wobei das hydrothermale Mikrowellenerwärmen das Erwärmen bei einer Temperatur von wenigstens 100 °C, vorzugsweise zwischen 150 °C und 200 °C, am stärksten bevorzugt zwischen 150 °C bis 180 °C, über einen Zeitraum von 5 bis 360 Minuten umfasst.

15. Vorgang nach einem der Ansprüche 1 bis 3 und 10 bis 14, wobei die Kristalle des ATO-Rahmens durch Filtrieren oder Zentrifugieren wiedergewonnen, mit Wasser gewaschen und bei einer Temperatur zwischen 20 °C und 120 °C getrocknet werden.

16. Vorgang nach einem der Ansprüche 1 bis 3 und 10 bis 15, wobei die Kristalle der ATO-Phase über einen Zeitraum von 2-24 h einer Kalzinierung bei einer Temperatur im Bereich von 200-800 °C, vorzugsweise im Bereich von 300-600 °C ausgesetzt werden.

## Revendications

1. Procédé de synthèse d'une structure de tamis moléculaire ATO comprenant les étapes consistant à :
(a) former un milieu réactionnel comprenant des sources réactives Al₂O₃, P₂O₅, un agent de matriçage et facultativement de la silice, où ledit agent de matriçage est un sel quaternaire à chaîne longue étant un composé de type diquat, constitué d'un groupe fonctionnel R₁, de deux anions au niveau des atomes de carbone terminaux et de triméthylamine, où ledit groupe fonctionnel R₁ est de l'alcane à chaîne linéaire en C₅-C₁₀ ;
(b) soumettre ledit milieu de réaction à un chauffage hydrothermique par micro-ondes jusqu'à ce que des cristaux de structure ATO se forment.

2. Procédé selon la revendication 1, dans lequel le groupe fonctionnel R₁ est de l'alcane à chaîne linéaire en C₆ et/ou C₇.

3. Procédé selon la revendication 1 ou 2, dans lequel lesdits anions au niveau de l'atome de carbone terminal est un anion organique ou un anion inorganique, où ledit anion inorganique est choisi dans un groupe comprenant le phosphate, les halogènes, le sulfate, l'hydroxyle, le bisulfate, le bisulfite, le carbonate, le bicarbonate, l'hexafluorophosphate, le nitrate, l'oxyhalogène, notamment le chlorate, ClO₃⁻ ou le perchlorate, ClO₄⁻, et dans lequel ledit anion organique est choisi dans un groupe comprenant le carboxylate, R-COO⁻, l'amide, RCON⁻, l'alcoxyde, R₃CO⁻ ou l'éthérate, RO⁻.

4. Procédé selon la revendication 1, dans lequel :
le groupe R₁ du cation organique est l'heptyle/l'hexyle ; et
ledit agent de matriçage est synthétisé par un procédé comprenant la réaction d'un précurseur contenant le groupe fonctionnel R₁ et deux anions au niveau des atomes de carbone terminaux avec une quantité stoechiométriquement requise de triméthylamine pour former un sel diquaternaire.

5. Procédé selon la revendication 4, dans lequel le précurseur a une formule
A--R₁--A
dans lequel A est un anion organique ou inorganique.

6. Procédé selon la revendication 5, dans lequel A est un anion inorganique choisi parmi le phosphate, les halogènes, le sulfate, l'hydroxyle, le bisulfate, le bisulfite, le carbonate, le bicarbonate, l'hexafluorophosphate, le nitrate, l'oxyhalogène, ou A est un anion organique choisi parmi le carboxylate, R--COO⁻, l'amide, RCON⁻, l'alcoxyde, R₃CO⁻ ou l'éthérate, RO⁻.

7. Procédé selon l'une quelconque des revendications 4 à 6, dans lequel le précurseur est le 1,7-dibromoheptane ou le 1,6-dibromohexane.

8. Procédé selon l'une quelconque des revendications 4 à 7, dans lequel ledit agent de matriçage est synthétisé par un procédé comprenant le mélange du précurseur selon la revendication 4 à une température de 50 à 80 °C à une pression autogène dans un solvant non aqueux, où ledit solvant non aqueux est choisi dans le groupe comprenant l'alcool, le toluène ou le tétrahydrofurane pendant 4 à 24 heures.

9. Procédé selon la revendication 8, dans lequel l'agent de matriçage est synthétisé par un procédé comprenant l'étape supplémentaire consistant à convertir l'agent sous forme de sel d'hydroxyde par échange d'ions à l'aide d'une colonne échangeuse d'ions.

10. Procédé selon la revendication 1, dans lequel ladite silice est choisie dans le groupe comprenant SiO₂, Ludox AS-30 et l'orthosilicate de tétraéthyle.

11. Procédé selon les revendications 1 à 3 et 10, dans lequel lesdites sources réactives dans ledit milieu réactionnel sont dans les rapports molaires des oxydes de
1,0 Al₂O₃ : 1,0 à 1,2 P₂O₅ : 0,3 à 1,2 R : 10 à 100 H₂O.

12. Procédé selon la revendication 11, dans lequel lesdites sources réactives dans le milieu réactionnel sont dans les rapports molaires des oxydes de
1,0 Al₂O₃ : 1,0 à 1,2 P₂O₅ : 0,5 à 1,0 R : 40 à 75 H₂O.

13. Procédé selon les revendications 1 à 3 et 10, dans lequel lesdites sources réactives dans le milieu réactionnel sont dans les rapports molaires des oxydes de
Al₂O₃ : P₂O₅ : 0 à 0,6 SiO₂ : R : 40 à 50 H₂O.

14. Procédé selon l'une quelconque des revendications 1 à 3 et 10 à 13, dans lequel ledit chauffage hydrothermique par micro-ondes comprend le chauffage à une température d'au moins 100 °C, de préférence entre 150 °C et 200 °C, plus préférablement entre 150 °C et 180 °C, pendant une période de 5 à 360 min.

15. Procédé selon l'une quelconque des revendications 1 à 3 et 10 à 14, dans lequel lesdits cristaux de structure ATO sont récupérés par filtration ou centrifugation, lavés à l'eau et séchés à une température comprise entre 20 °C et 120 °C.

16. Procédé selon l'une quelconque des revendications 1 à 3 et 10 à 15, dans lequel lesdits cristaux de phase ATO sont soumis à une calcination à une température comprise entre 200 et 800 °C, de préférence entre 300 et 600 °C pendant une période de 2 à 24 h.
